# EUROPEAN PATENT SPECIFICATION

(11) **EP 3 315 319 B1**
(45) Date of publication and mention of the grant of the patent: **24.06.2020**
(21) Application number: 17197143.5
(22) Date of filing: 18.10.2017
(51) Int. Cl.: B60C 1/00, C08L 71/00, C08L 75/08, B60C 19/00, C08G 18/18

(54) **TIRE WITH REDUCED CAVITY NOISE**
REIFEN MIT REDUZIERTEM HOHLRAUMGERÄUSCH
PNEU À BRUIT DE CAVITÉ RÉDUIT

(30) Priority: 25.10.2016 KR 20160138861
(43) Date of publication of application: 02.05.2018
(73) Proprietor: Hankook Tire Co., Ltd., Seoul 135-723 (KR)
(72) Inventor: Seo, Byeong Ho, 34127 Daejeon (KR); Park, Ju Geon, 34127 Daejeon (KR); Kang, Chang Hwan, 34111 Daejeon (KR); Kim, Hak Joo, 34119 Daejeon (KR)
(74) Representative: Petraz, Gilberto Luigi

(56) References cited:
- EP-A1- 1 950 057
- EP-A1- 2 138 331
- EP-A1- 2 457 748

## Description

### BACKGROUND OF THE INVENTION

### Field of the Invention

The present invention relates to a tire with reduced cavity noise which is stable while preventing separation of a sound absorber even upon heating and deformation during driving by including an adhesive agent layer with improved elasticity and adhesive strength.

### Description of the Related Art

With strengthened government regulations on vehicle noise and increasing demand for electric vehicles, the need for reducing noise from tires is gradually increasing. However, in accordance with recent development trends, UHP (ultra high performance) tires having a configuration in which a tread contacting tire pavement is formed at a large width and a side wall corresponding to a side surface of the tire has a low aspect ratio are drawing a great deal of attention. In the case of such tires, since the strength of the side wall is increased due to structural properties thereof, the tires cannot normally perform their function of damping shock transferred from the pavement, thus causing an increase in sound pressure related to noise induction. This generates air vibration in a cavity of a tire, so that noise is transferred to the inside of the vehicle and is then detected by a driver, which eventually deteriorates ride comfort (hereinafter, noise due to air vibration will be broadly called "cavity sound").

Conventional technologies to reduce cavity sound include use of polyurethane foams having open cells. However, when a general liquid adhesive agent is used to adhere polyurethane foams to an inner liner inside a tire, the adhesive agent is absorbed in the sound absorber layer, thus disadvantageously leading to problems of significantly reducing sound absorbance and adhesive strength.

The adhesive agent cured by light or heat, instead of a liquid adhesive agent, (JP 2015-166134 A) may have excellent initial adhesive strength, but has low stress such as elasticity and therefore does not endure further repeatedly applied deformation and vibration, in addition to deformation of tires caused by vehicle load, and is finally broken, which disadvantageously causes detachment or removal of a sound absorber.

When a butyl-based hot-melt adhesive agent is applied, the adhesive agent sufficiently elongates and offsets exterior shock even upon deformation of tires. However, as temperature increases, the viscosity of the hot-melt adhesive agent decreases, flowability increases, and the position of the sound absorber attached in a tire may be changed during driving, thus having a negative impact on balance or uniformity of the tire.

Some patents disclose use of silicone-based adhesive agents, but such adhesive agents are disadvantageously vulnerable to high deformation of tires due to low strength.

Therefore, there is a need for a specific adhesive agent which can endure tire deformation and heating in order to attach, to an inner liner, a sound absorber to solve the drawbacks of adhesive agents and reduce cavity sounds of tires.

### [Prior Art Document]

Japanese Patent Publication Laid-open No. 2015-166134

### SUMMARY OF THE INVENTION

Therefore, the present invention has been made in view of the above problems, and it is one object of the present invention to provide an adhesive agent layer which has improved elasticity and adhesive strength, and thereby has high tenacity to endure deformation of tires and heating.

It is another object of the present invention to provide a tire which can reduce cavity sound, which is tire noise generated by air vibration in a tire, by attaching a sound absorber layer with an adhesive agent layer with strong tenacity.

It is yet another object of the present invention to provide a tire which maintains the performance of reducing cavity sound until the end of the abrasion lifespan of tires without detachment or removal of a sound absorber even upon variation in temperature of tires during driving and deformation by vehicle load or exterior shock, by attaching the sound absorber layer with an adhesive agent layer with strong tenacity.

In accordance with the present invention, the above and other objects can be accomplished by the provision of a tire with reduced cavity noise including an adhesive agent layer applied to an inner surface of an inner liner, and a sound absorber layer attached to the adhesive agent layer, wherein the adhesive agent layer includes polyether containing an alkoxysilane substituent group.

The alkoxysilane substituent group bonds to the polyether backbone, and the alkoxysilane substituent group does not bond to the ends of the polyether.

The alkoxysilane may be any one ethoxysilane selected from the group consisting of methyldiethoxysilane, ethyldiethoxysilane, propyldiethoxysilane, butyldiethoxysilane, dimethylethoxysilane, diethylethoxysilane, dipropylethoxysilane, dibutylethoxysilane, methylethylethoxysilane, methylpropylethoxysilane, methylbutylethoxysilane, and triethoxysilane.

The polyether containing an alkoxysilane substituent group in a main chain may include a repeat unit represented by the following Formula 2: 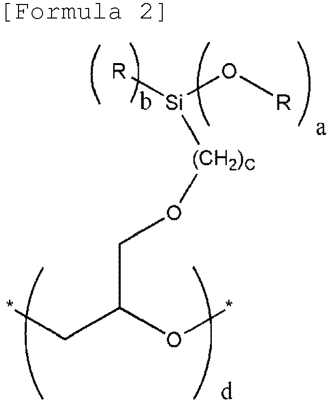
wherein a is an integer of 1 to 3 and b is an integer of 0 to 2 (with the proviso that a+b=3);
c is an integer of 0 to 22;
d is an integer of 1 to 500; and
each R is independently a C1 to C20 alkyl group.

The polyether containing an alkoxysilane substituent group in a main chain may further include an oxypropylene repeat unit represented by the following Formula 3a or 3b: 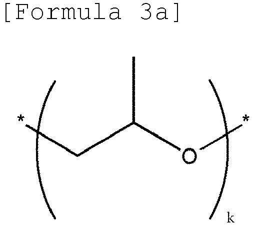 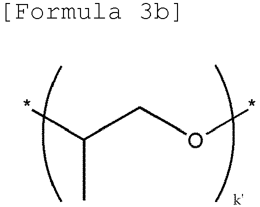 wherein k and k' are integers of 0 to 10,000.

The polyether containing an alkoxysilane substituent group in a main chain may further include a urethane repeat unit represented by Formula 4:

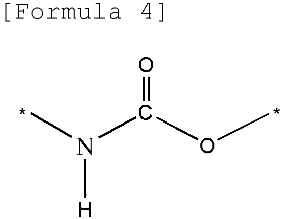

The sound absorber layer may include a polyurethane foam.

### BRIEF DESCRIPTION OF THE DRAWINGS

The above and other objects, features and other advantages of the present invention will be more clearly understood from the following detailed description taken in conjunction with the accompanying drawings, in which:

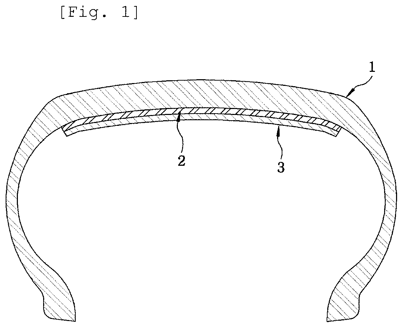

FIG. 1 is a side sectional view of a pneumatic tire according to an embodiment of the present invention.

### DETAILED DESCRIPTION OF THE INVENTION

Hereinafter, the present invention will be described in more detail.

The tire with reduced cavity noise according to an embodiment of the present invention includes an adhesive agent layer applied to an inner surface of an inner liner and a sound absorber layer attached to the adhesive agent layer, wherein the adhesive agent layer includes polyether containing an alkoxysilane substituent group in a main chain rather than at an end, meaning that the alkoxysilane substituent group bonds to the polyether backbone, and the alkoxysilane substituent group does not bond to the ends of the polyether.

The side sectional view of a pneumatic tire according to an embodiment of the present invention is shown in FIG. 1. Referring to FIG. 1, the pneumatic tire 1 according to the present invention includes an adhesive agent layer 2 applied to an inside surface of an inner liner and a sound absorber layer 3 attached to the adhesive agent layer 2.

The polyether containing an alkoxysilane substituent group in a main chain, included in the adhesive agent layer 2, may be represented by the following Formula 1.

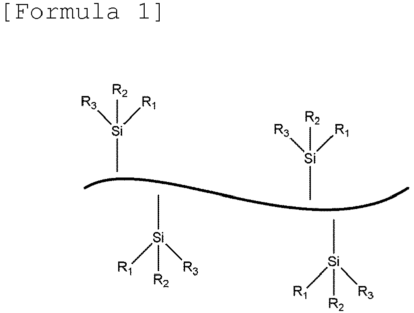

Formula 1 only illustrates a shape in which the substituent group is bound to a main chain and the number of substituent group is not limited to four. A thick line means a polymer.

The polyether can improve adhesive strength of the adhesive agent layer 2 by including a substituent group in a main chain, rather than at an end.

The cross-linkage degree of a polymer plays an important role in improving the adhesive strength of the adhesive agent layer 2. In a case where a functional group is present only at both ends, the adhesive agent layer does not endure the deformation of tires due to low adhesive strength of the adhesive agent layer 2, thus disadvantageously causing breakage of the adhesive agent layer 2. On the other hand, when the substituent group is incorporated in the main chain, as in the present invention, the cross-linkage degree between polymers is improved and the strength of the adhesive agent layer 2 is thus enhanced.

R₁ to R₃ each respectively represent a C1 to C20 alkyl or alkoxy group. That is, the substituent group may be mono-alkoxysilane, di-alkoxysilane, or trialkoxysilane.

Specifically, the alkoxysilane may be C1 to C20 methoxysilane, ethoxysilane, propoxysilane, buthoxysilane, pentoxysilane or the like, preferably ethoxysilane.

When the functional group is methoxysilane, methanol is produced during hydrolysis, which may lead to environmental problems and be detrimental to health of workers. However, when, as in the present invention, an ethoxysilane substituent group having an incorporated ethoxy is used, ethanol is produced although hydrolysis occurs during curing, which is advantageously non-harmful to human health.

The ethoxy may include any one selected from the group consisting of methyldiethoxysilane, ethyldiethoxysilane, propyldiethoxysilane, butyldiethoxysilane, dimethylethoxysilane, diethylethoxysilane, dipropylethoxysilane, dibutylethoxysilane, methylethylethoxysilane, methylpropylethoxysilane, methylbutylethoxysilane and triethoxysilane.

The polyether containing an alkoxysilane substituent group in a main chain may include a repeat unit represented by the following Formula 2: 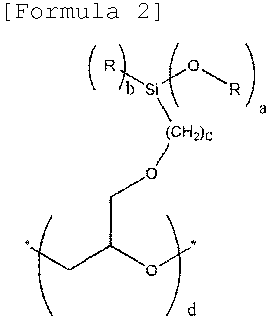 wherein a is an integer of 1 to 3, b is an integer of 0 to 2 (with the proviso that a+b=3), c is an integer of 0 to 22, d is an integer of 1 to 500, and each R is independently a C1 to C20 alkyl group, preferably, a C1 to C6 alkyl group, more preferably any one substituent group selected from the group consisting of methyl, ethyl, propyl, isopropyl, n-butyl and sec-butyl.

The polyether containing an alkoxysilane substituent group in a main chain may further include an oxypropylene repeat unit represented by the following Formula 3a or 3b. 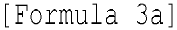 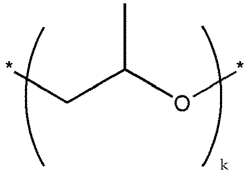 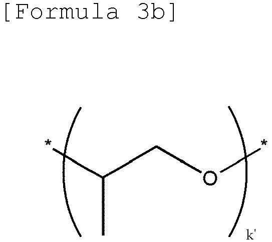 wherein k and k' are integers of 0 to 10,000.

The polyether containing an alkoxysilane substituent group in a main chain may further include a urethane repeat unit represented by the following Formula 4.

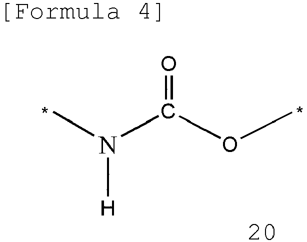

The strength can be improved to endure external force while maintaining elasticity by further including the urethane repeat unit.

The polyether containing an alkoxysilane substituent group in a main chain may further include a repeat unit represented by the following Formulae 5 to 9: 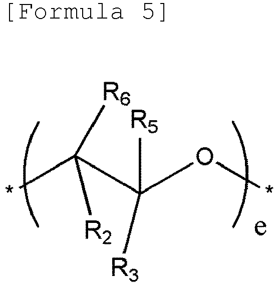 wherein R₂, R₃, R₅ and R₆ each independently represent hydrogen or a C1 to C20 alkyl group, and e is an integer of 0 to 10,000; 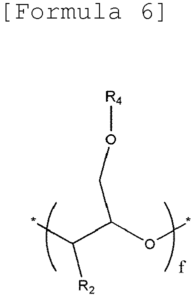 wherein R₂ represents hydrogen or a C1 to C20 alkyl group, R₄ represents hydrogen or a C1 to C24 alkyl group, and f is an integer of 0 to 1,000; 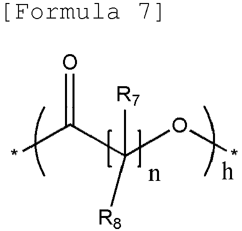 wherein R₇ and R₈ are each independently any one selected from the group consisting of hydrogen, an alkyl group, an alkoxy group, an aryl group and an aralkyl group (generically refers to a combined group of -Ar(CH₂)ₙ-formed by replacing a carbon of an alkyl group with an aromatic hydrocarbon (aryl) such as phenyl; and is an abbreviation of an arylalkyl), n is an integer of 2 to 8 and h is an integer of 0 to 500; and 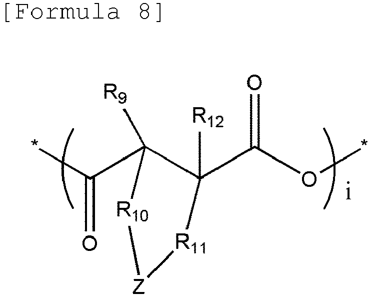 wherein R₉ to R₁₂ are each independently any one selected from the group consisting of hydrogen, an alkyl group, an alkenyl group, an alkoxy group, an aryl group and an aralkyl group, and optionally, R₁₀ and R₁₁ can form an aliphatic or aromatic ring through a Z fragment, and when a ring is formed, Z may be a bivalent alkylene or alkenylene group, and i is an integer of 0 to 500. 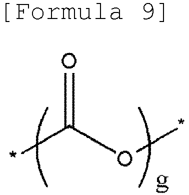 wherein g is an integer of 1 to 1000.

The polyether containing an alkoxysilane substituent group in a main chain may have an end group represented by the following Formula 10: 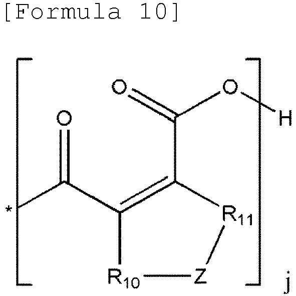 wherein R₁₀ and R₁₁ are each independently any one selected from the group consisting of hydrogen, an alkyl group, an alkenyl group, an alkoxy group, an aryl group and an aralkyl group, optionally, R₁₀ and R₁₁ can form an aliphatic or aromatic ring through a Z fragment, and when a ring is formed, Z may be a bivalent alkylene or alkenylene group, and j is an integer of 0 to 500.

The adhesive agent layer 2 may further include well-known additives such as tackifiers, curing agents, leveling agents, wetting agents, flow controllers, anti-skinning agents, defoaming agents, fillers (for example, chalk, lime, powder, precipitated and/or pyrogenic silica, aluminum silicate and high-melting point wax), viscosity modifiers, plasticizers, pigments, dyes, and stabilizers to pyrolysis and oxidative decomposition.

The adhesive agent layer 2 can maintain the performance of reducing cavity sound until the end of the abrasion lifespan of tires without detachment, separation or removal of sound absorbers even variation by vehicle load or exterior shock or under low-temperature as well as high temperature environments.

In addition, the hardness of the adhesive agent layer 2 after curing may be 20 to 50 (Shore A). When the hardness is lower than 20, the strength of the adhesive agent is deteriorated and the adhesive agent layer 2 is readily broken by applied exterior force, and when the hardness is 50 or more, the adhesive agent layer 2 may be readily separated due to repeated deformation during driving.

The adhesive agent layer 2 including polyether containing an alkoxysilane substituent group in a main chain can maintain the performance of reducing cavity sound until the end of the abrasion lifespan of tires without detachment, separation or removal of sound absorbers even variation by vehicle load or exterior shock, or under low-temperature as well as high temperature environments.

The sound absorber that can be used for the sound absorber layer 3 may be any one selected from the group consisting of polyurethane foams, monofilaments, a sponge, rigid urethane foams, flexible urethane foams, EPDM foams and polyethylene foams.

The monofilaments may be any one selected from the group consisting of organic synthetic fibers, inorganic fibers, regenerated fibers and natural fibers.

The sound absorber may be monofilaments attached to a curable adhesive agent and the sound absorber containing monofilaments can improve sound absorption performance.

Examples of the organic synthetic fibers include polyolefin such as polyethylene, polypropylene and polybutylene, aliphatic polyamide, aromatic polyamide, polyester such as polyethylene terephthalate, polyethylene naphthalate, polyethylene succinate and polymethyl methacrylate, syndiotactic-1,2-polybutadiene, acrylonitrile butadiene styrene copolymers, polystyrene, copolymers thereof and the like.

Since the organic synthetic fibers are generally chemically stable and are thus highly compatible with an adhesive agent, they are suitably used in conjunction with the adhesive agent layer prepared according to the present invention.

Examples of the inorganic fibers include carbon fibers, glass fibers and the like, examples of the regenerated fibers include rayon, cupra and the like, and examples of the natural fibers include cotton, silk, wool and the like.

The sound absorber layer 3 according to the present invention most preferably includes a polyurethane foam as a sound absorber.

The polyurethane foam is basically produced by urethane reaction of a polyisocyanate compound and a polyol (polyhydroxy) compound.

The polyurethane foam is a sound absorber which is based on polyurethane having open cells and may have a density of 25 to 35 kg/m³.

The polyurethane foam having open cells is disadvantageously difficult to adhere to an inner liner because an adhesive agent having low viscosity is excessively absorbed in the polyurethane foam. However, a silicone adhesive agent is absorbed only on the surface of open cells due to high viscosity and elasticity, since it does not cause deterioration in adhesive strength, and it is suitable for adhesion of a polyurethane foam because it secures durability against high deformation.

Hereinafter, embodiments of the present invention will be described in more detail such that a person having ordinary knowledge in the field to which the present invention pertains can easily implement the embodiments. However, the embodiments of the present invention can be implemented in various forms and should not be construed as being limited to the embodiments described herein.

### [Production Example: Production of tire with reduced cavity noise]

### <Example 1>

An adhesive agent was applied to a tire inner liner to form an adhesive agent layer. The adhesive agent used herein was TEGOPAC SEAL 100, BOND 250 (251) purchased from Evonik Industries.

A urethane sound absorber was attached to the adhesive agent layer.

### <Comparative Example 1>

An adhesive agent was applied to a tire inner liner to form an adhesive agent layer. The adhesive agent used herein was Terostat® MS series (modified silane polymer) purchased from Henkel AG & Company.

The adhesive agent has the following Formula 11.

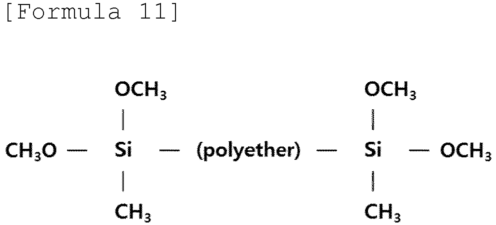

### [Test Example 1: Evaluation of adhesive strength]

Physical properties of the adhesive agent layer produced in Example and Comparative Example and a tire including the same are measured and results are shown in Table 1.

**TABLE 1**

| Properties | Items | Comparative Example 1 | Example 1 |
|---|---|---|---|
| Tensile properties | Hardness (shore A) | 28 | 32 |
| | Tensile strength (N/mm²) | 1.1 | 1.4 |
| | Elongation (%) | 450 | 460 |
| Tensile aging properties | Hardness (shore A) | 27 | 34 |
| | Tensile strength (N/ mm²) | 0.7 | 1.6 |
| | Elongation (%) | 290 | 410 |
| Evaluation of adhesive strength | Peel test (N/cm) | 25.4 | 44.2 |
| Evaluation of adhesive aging (120°C, 120 hrs) | Peel test (N/cm) | 17.9 | 47.4 |

As can be seen from Table 1, Example 1 containing polyether having a functional group in a main chain exhibited improved hardness and tensile strength, and more improved adhesive strength. Example 1 exhibited lower elongation (strain) than Comparative Example 1, which indicates that it is possible to prevent isolation of an attached sound absorber upon high deformation.

In particular, even after aging at 120°C for 120 hours, Example 1 exhibited better physical properties than Comparative Example 1. When the adhesive agent according to Example 1 is applied to a tire inner liner for vehicles and a sound absorber is attached thereto, the effect of absorbing sound can be maintained even upon deformation by vehicle load and heating during driving.

In addition, Example 1 yields ethanol as a by-product non-harmful to humans, while Comparative Example 1 yields methanol as a by-product, which is harmful to humans in the case of using the adhesive agent.

The adhesive agent layer according to the present invention has improved elasticity and adhesive strength and thus can endure deformation of tires and heating.

The adhesive agent layer according to the present invention can reduce cavity sound, which is tire noise generated by air vibration in a tire, by attaching a sound absorber layer with an adhesive agent layer with strong tenacity.

The tire according to the present invention can maintain the performance of reducing cavity sound until the end of the abrasion lifespan of tires without detachment or removal of a sound absorber even upon variation in temperature of tires during driving and deformation by vehicle load or exterior shock, by attaching the sound absorber layer with an adhesive agent layer with strong tenacity.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A tire with reduced cavity noise comprising:
an adhesive agent layer applied to an inner surface of an inner liner; and
a sound absorber layer attached to the adhesive agent layer,
wherein the adhesive agent layer comprises polyether containing an alkoxysilane substituent group, and
wherein the alkoxysilane substituent group bonds to the polyether backbone, and the alkoxysilane substituent group does not bond to the ends of the polyether.

2. The tire according to claim 1, wherein the alkoxysilane is any one ethoxysilane selected from the group consisting of methyldiethoxysilane, ethyldiethoxysilane, propyldiethoxysilane, butyldiethoxysilane, dimethylethoxysilane, diethylethoxysilane, dipropylethoxysilane, dibutylethoxysilane, methylethylethoxysilane, methylpropylethoxysilane, methylbutylethoxysilane, and triethoxysilane.

3. The tire according to claim 1, wherein the polyether containing an alkoxysilane substituent group in a main chain comprises a repeat unit represented by the following Formula 2: 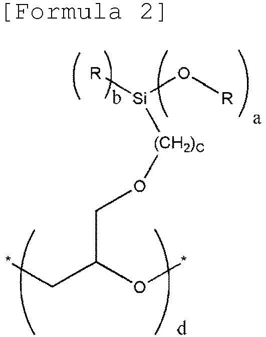
wherein a is an integer of 1 to 3 and b is an integer of 0 to 2 (with the proviso that a+b=3);
c is an integer of 0 to 22;
d is an integer of 1 to 500; and
each R is independently a C1 to C20 alkyl group.

4. The tire according to claim 3, wherein the polyether containing an alkoxysilane substituent group in a main chain further comprises an oxypropylene repeat unit represented by the following Formula 3a or 3b: 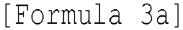 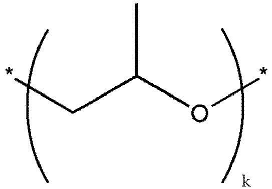 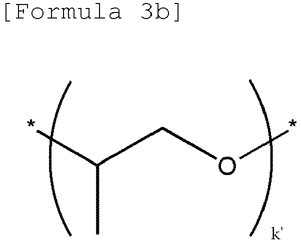 wherein k and k' are integers of 0 to 10,000.

5. The tire according to claim 3, wherein the polyether containing an alkoxysilane substituent group in a main chain further comprises a urethane repeat unit represented by Formula 4:

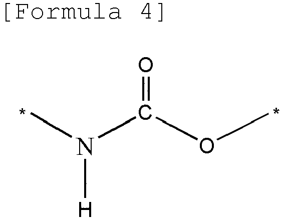

6. The tire according to claim 1, wherein the sound absorber layer comprises a polyurethane foam.

## Patentansprüche

1. Reifen mit reduziertem Hohlraumgeräusch, umfassend eine Haftmittelschicht, die auf eine innere Oberfläche einer inneren Auskleidung aufgebracht ist, und eine Schallabsorptionsschicht, die an der Haftmittelschicht angebracht ist, wobei die Haftmittelschicht Polyether aufweist, das eine Alkoxysilan-Substituentengruppe enthält, wobei die Alkoxysilan-Substituentengruppe an das Polyether-Rückgrat gebunden ist und die Alkoxysilan-Substituentengruppe nicht an die Enden des Polyethers gebunden ist.

2. Reifen nach Anspruch 1, wobei das Alkoxysilan ein Ethoxysilan ist, ausgewählt aus der Gruppe, bestehend aus Methyldiethoxysilan, Ethyldiethoxysilan, Propyldiethoxysilan, Butyldiethoxysilan, Dimethylethoxysilan, Diethylethoxysilan, Dipropylethoxysilan, Dibutylethoxysilan, Methylethylethoxysilan, Methylpropylethoxysilan, Methylbutylethoxysilan und Triethoxysilan.

3. Reifen nach Anspruch 1, wobei das Polyether, das eine Alkoxysilan-Substituentengruppe in einer Hauptkette enthält, eine Wiederholeinheit umfasst, die durch die folgende Formel 2 angegeben wird: 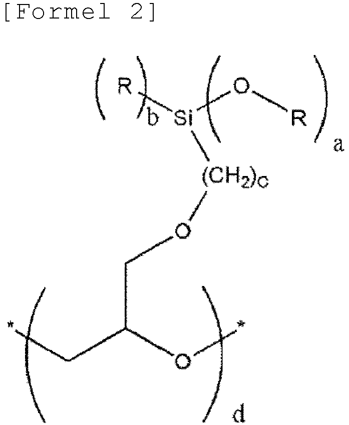 wobei a eine ganze Zahl von 1 bis 3 ist und b eine ganze Zahl von 0 bis 2 ist (mit der Maßgabe, dass a+b=3), c eine ganze Zahl von 0 bis 22 ist, d eine ganze Zahl von 1 bis 500 ist und jedes R unabhängig eine C1- bis C20-Alkylgruppe ist.

4. Reifen nach Anspruch 3, wobei das Polyether, das eine Alkoxysilan-Substituentengruppe in einer Hauptkette enthält, des Weiteren eine Oxypropylen-Wiederholeinheit umfasst, die durch die folgende Formel 3a oder 3b angegeben wird: 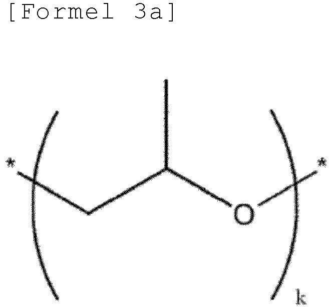 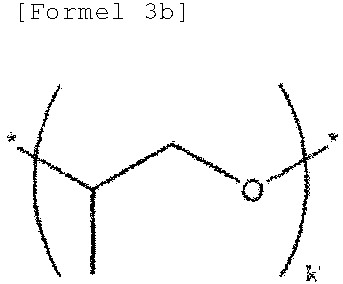 wobei k und k' ganze Zahlen von 0 bis 10.000 sind.

5. Reifen nach Anspruch 3, wobei das Polyether, das eine Alkoxysilan-Substituentengruppe in einer Hauptkette enthält, des Weiteren eine Urethan-Wiederholeinheit umfasst, die durch die folgende Formel 4 angegeben wird:

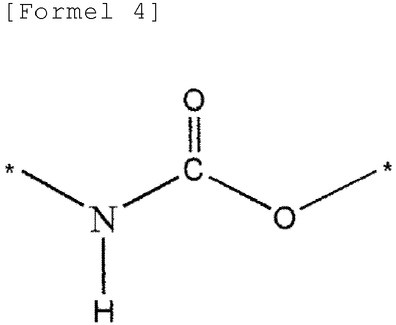

6. Reifen nach Anspruch 1, wobei die Schallabsorptionsschicht einen Polyurethanschaum aufweist.

## Revendications

1. Pneumatique à bruit de cavité réduit comprenant :
une couche d'agent adhésif appliquée sur une surface intérieure d'un revêtement intérieur ; et
une couche d'absorption acoustique fixée à la couche d'agent adhésif,
où la couche d'agent adhésif comprend un polyéther contenant un groupe substituant d'alcoxysilane, et
où le groupe substituant d'alcoxysilane se lie au squelette du polyéther et
le groupe substituant d'alcoxysilane ne se lie pas aux extrémités du polyéther.

2. Pneumatique selon la revendication 1, où l'alcoxysilane est un éthoxysilane quelconque choisi dans le groupe constitué de méthyldiéthoxysilane, éthyldiéthoxysilane, propyldiéthoxysilane, butyldiéthoxysilane, diméthyléthoxysilane, diéthyléthoxysilane, dipropyléthoxysilane, dibutyléthoxysilane, méthyléthyléthoxysilane, méthylpropyléthoxysilane, méthylbutyléthoxysilane et triéthoxysilane.

3. Pneumatique selon la revendication 1, où le polyéther contenant un groupe substituant d'alcoxysilane dans une chaîne principale comprend un motif de répétition représenté par la Formule 2 suivante : 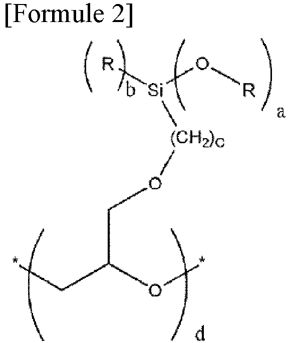
où a est un nombre entier compris entre 1 et 3 et b est un nombre entier compris entre 0 et 2 (à condition que a+b=3) ;
c est un nombre entier compris entre 0 et 22 ;
d est un nombre entier compris entre 1 et 500 ; et
chaque R est indépendamment un groupe alkyle C1-C20.

4. Pneumatique selon la revendication 3, où le polyéther contenant un groupe substituant d'alcoxysilane dans une chaîne principale comprend en outre un motif de répétition d'oxypropylène représenté par les Formules 3a ou 3b suivantes : 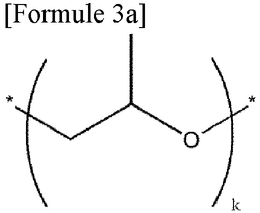 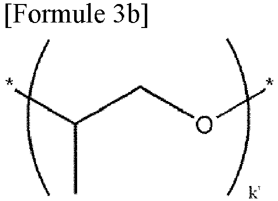 où k et k' sont des nombres entiers compris entre 0 et 10.000.

5. Pneumatique selon la revendication 3, où le polyéther contenant un groupe substituant d'alcoxysilane dans une chaîne principale comprend en outre un motif de répétition d'uréthane représenté par la Formule 4 :

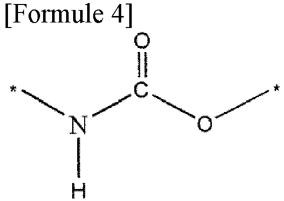

6. Pneumatique selon la revendication 1, où la couche d'absorption acoustique comprend une mousse de polyuréthane.
